# EUROPEAN PATENT SPECIFICATION

(11) **EP 4 388 191 B1**
(45) Date of publication and mention of the grant of the patent: **04.03.2026**
(21) Application number: 22761948.3
(22) Date of filing: 12.08.2022
(51) Int. Cl.: F03D 1/06, F03D 80/50, E04G 3/24

(54) **TEMPORARY WORK PLATFORM ASSEMBLY**
TEMPORÄRE ARBEITSPLATTFORMANORDNUNG
ENSEMBLE PLATE-FORME DE TRAVAIL TEMPORAIRE

(30) Priority: 16.08.2021 DK PA202170409
(43) Date of publication of application: 26.06.2024
(73) Proprietor: VESTAS WIND SYSTEMS A/S, 8200 Aarhus N (DK)
(72) Inventor: PETERSEN, Aksel, 8200 Aarhus N (DK)
(74) Representative: Vestas Patents Department
(86) International application number: PCT/DK2022/050167
(87) International publication number: WO 2023/020672

(56) References cited:
- WO-A2-2014/070084
- CN-A- 106 677 510
- US-A1- 2020 056 582

## Description

### Technical field

The present invention relates generally to wind turbines and more specifically to a temporary work platform assembly for installation inside a wind turbine rotor blade.

### Background

Wind turbine rotor blades are designed to withstand a lifetime of use in harsh weather conditions. However, service operations may be required at some stage during the lifetime of the blade. For example, lightning strikes or high energy collisions could damage an outer shell of the wind turbine blade such that inspection and/or repair work may be required.

Service operations inside the blade are typically carried out with the blade arranged in a substantially horizontal orientation such that technicians may stand and walk on an inner surface of the shell during the service operation. Further, a horizontal orientation is also typically preferred over a vertical orientation for safety reasons because an internal cavity of a vertically-arranged blade may extend downwards substantially uninterrupted for 50 m or more, posing a significant risk of injury in the event of a fall.

In many examples, wind turbine blades are typically removed from the wind turbine for inspection and/or repair work. However, removing a wind turbine blade in the field is very expensive, particularly for offshore wind turbines requiring specialised crane vessels to remove a blade. Further, removing and reattaching a blade is a time consuming operation, leading to significant downtime during which the turbine is out of service. Improvements to methods of servicing a wind turbine blade are therefore required. It is against this background that the present invention has been devised.

CN106677510 and WO2014/070084 describe platforms for a wind turbine tower. US2020/056582 describes a root bulkhead for a wind turbine blade.

### Summary

According to a first aspect of the present invention there is provided a temporary work platform assembly in accordance with claim 1.

Providing a work platform as a work platform assembly facilitates simple delivery of the platform assembly into the blade in a disassembled state whilst the blade remains attached to the wind turbine. For example, space inside a nacelle and/or hub of a wind turbine may be limited, and providing the work platform as a plurality of separate parts means that each part may be transported into the blade separately. Delivering a work platform into the blade as a plurality of separate parts is particularly preferable in examples where access to the blade interior is further constrained by an access opening, e.g. a manhole, provided at or near the root of the rotor blade. Following delivery into the blade, the work platform assembly may subsequently be assembled within the blade to form a work platform assembly that would otherwise not fit through a manhole.

The platform of the work platform assembly may be of modular construction. For example, the panels may be provided as a plurality of separate panels which may be delivered into the blade separately when the work platform assembly is in a disassembled state. The panels may be configured for arrangement adjacent to one another to form the platform. The platform preferably provides a substantially planar work surface for supporting a person during service or maintenance of the wind turbine blade. Preferably, the platform panels may be rigid platform panels.

Each panel may be configured to abut, or fit into or against, an adjacent panel such that the platform defines a substantially continuous work surface. The platform therefore preferably comprises no gaps between abutting adjacent panels. Such a configuration helps to ensure items, tools or debris from the service operation are contained on the platform and do not fall into the blade interior below the platform.

The support structure may be configured to prop up the platform from below in use. In other words, the support structure may be configured to underpin and support the platform from below in use. The platform, supported from below by the support structure, may therefore be substantially free of obstructions during a service operation.

The support structure may comprise a plurality of interconnected support members. Assembling the support structure from a plurality of support members facilitates delivery of the support members into the blade to form a support structure that may otherwise not be manoeuvrable inside the turbine. The support structure preferably comprises a support bracket configured for connection to the internal surface of the wind turbine blade. The support bracket preferably comprises a plurality of distributed attachment points for connecting the support bracket to the internal surface. The support structure is preferably adapted for connection to the internal surface via the support bracket. The support bracket may therefore distribute the weight of the platform in use to avoid or substantially reduce the risk of any stress concentrations forming in the internal surface.

The support structure may be adapted to form a hinged connection with the internal surface of the wind turbine blade. This may further help to reduce the risk of stress concentrations forming in the internal surface as a result of the connection with the support structure.

The support structure may comprise an oblique support member configured to extend between and transverse to both the internal surface and the platform. The oblique support member is preferably configured for connection to at least one of the internal surface or another support member of the support structure. As such, the oblique support member may increase the stability and load bearing capacity of the support structure. The oblique support member is preferably adapted to form a hinged connection with at least one of the internal surface or another support member of the support structure.

The oblique support member may be extendable. The oblique support member may therefore comprise a plurality of discrete lengths to which the support member may be extended. An extendable support member may be configured to be extended after delivery into the blade, further facilitating delivery of the platform assembly parts into the blade.

Preferably, the support members of the support structure may be rigid support members.

The support structure is adapted for connection to the spar component. The spar component may be a shear web. In some examples, the spar component may be a box spar. Preferably, the internal surface of the wind turbine blade is not an inner surface of the outer shell. As such, in some examples the support structure is preferably configured for connection only to a spar component.

The temporary work platform assembly may further comprise a skirt extending around the platform. The skirt may form a barrier or wall extending around the platform. The skirt may help to contain items, such as tool or materials, on the work platform during a service operation. The skirt may be configured to extend from the platform to one or more internal surfaces of the wind turbine blade. Preferably the skirt is therefore configured to close any gaps between the platform and the internal surfaces of the blade surrounding the platform. The skirt preferably extends transverse to the platform. Preferably the skirt is configured to extend upwards from the platform in use. Preferably only the skirt of the temporary platform assembly is configured to contact the inner surface of the outer shell.

The skirt may comprise a plurality of adaptable skirt sections hingedly coupled to the platform. As such, the work platform assembly may be suitable for use at a plurality of radial positions along the blade, despite the shape of the blade varying with radial position, because the adaptable skirt sections may be arranged differently at different radial positions to extend from the platform to one or more internal surfaces of the wind turbine blade. The skirt sections may be configured to be brought into contact with the inner surface of the outer shell.

The temporary work platform assembly may further comprise an ancillary platform configured for arrangement above the platform. The ancillary platform may be configured to support a service technician at an additional radial position along the blade during a service operation. The ancillary platform is preferably of lightweight construction. The ancillary platform may therefore comprise a discontinuous floor section. The discontinuous floor section of the auxiliary platform may comprise one or more mesh panels, such as a metal grate for example. As such, the floor section may comprise one or more mesh panels. Preferably, the floor section panels of the ancillary platform may be rigid floor section panels.

The temporary work platform assembly may further comprise one or more attachment points configured for fixing one or more tools to the platform assembly. The or each attachment point may be provided in or on the platform. The one or more attachment points may comprise one or more lashing eye bolts.

There is also provided a wind turbine blade comprising a temporary work platform assembly as described herein.

According to a second aspect of the present invention there is provided a method of installing a temporary work platform assembly inside a wind turbine rotor blade according to claim 12.

Connecting the support structure to an internal surface of the wind turbine blade may comprise connecting the support structure to a spar component inside the wind turbine blade. The spar component may be a shear web. In some examples, the spar component may be a box spar.

In preferred examples, connecting the support structure to an internal surface of the wind turbine comprises connecting the support structure to a surface that is not an inner surface of the outer shell. As such, in some examples, the support structure may be connected to a spar component only, i.e. such that the work platform assembly is supported only by the spar component. Connecting the support structure to the spar component only, and not to an inner surface of the shell, may help to ensure that the shell is not damaged or disturbed in any way that could introduce stress concentrations in the shell in normal use of the blade.

The method may comprise installing the temporary work platform assembly between the spar component and an outer shell of the wind turbine blade. Alternatively, the method may comprise installing the temporary work platform assembly between the spar component and an additional spar component inside the wind turbine blade. In some examples the method may therefore comprise installing the temporary work platform assembly between two mutually-opposed shear webs.

The method may comprise installing the temporary work platform assembly inside a wind turbine blade having a blade root diameter greater than 2 m. Such blades may comprise a partition, such as a bulkhead or stiffening plate, provided at or near a root of the blade, such as in pitch bearing of the blade. As such, a work platform assembly as described herein may be installed in such a blade by separately delivering parts of the platform assembly through a manhole in the partition to form a work platform that would otherwise not fit through the manhole.

The method may further comprise installing the temporary work platform assembly inside the wind turbine blade when the blade is arranged in a substantially horizontal orientation. The temporary work platform assembly is preferably used to support a person during service or maintenance of the wind turbine blade when the blade is arranged in a substantially vertical orientation.

Providing the plurality of panels and the support structure at the required location inside the wind turbine blade may comprise delivering the panels and support structure into the wind turbine blade through a personnel access opening, such as a manhole, in a bulkhead or plate at or near the root of the wind turbine blade. The manhole may be any suitable shape. For example, the manhole may be polygonal, such as square or rectangular shaped for example. Alternatively, the manhole may be substantially elliptical. In preferred examples, the manhole may have a maximum width of 1 m or less. The manhole may have a minimum width of 0.6 m to facilitate safe access for personnel through the manhole. In some examples, the manhole may be substantially circular. The manhole may therefore have a maximum diameter of 1 m or less. In preferred examples, the manhole may have a minimum diameter of 0.6 m to facilitate safe access for personnel through the manhole.

The method may comprise removing the temporary work platform assembly from the blade following completion of a service operation in which the platform was used to support a person. As such, the provision of the work platform assembly preferably does not increase the weight of the wind turbine blade in normal use, i.e. when no service operation is in progress.

The method may further comprise arranging climbing apparatus extending between the platform and a root of the wind turbine blade. The method may further comprise connecting the climbing apparatus to the internal surface of the wind turbine blade. This may help to improve the stability of the climbing apparatus in use.

The method may further comprise attaching one or more tools to the temporary work platform assembly.

The method may further comprise attaching an ancillary platform kit to the temporary work platform assembly. The method may further comprise assembling an ancillary platform above the platform when the blade is arranged in a substantially vertical orientation.

Performing service operations with the blade arranged vertically presents new challenges not previously considered in conventional service operations where the blade is arranged horizontally. As described above, an interior cavity of a vertically-arranged blade may extend downwards over a great length, and access to the cavity may be facilitated by an access opening, such as a manhole, defined in a partition located at or near a root end of the rotor blade. A manhole may typically be covered for safety when access to the blade interior is not required. However, it may be necessary for the manhole to be uncovered to provide access to the blade interior when conducting a service operation inside the blade, and additional safety measures may therefore be required.

### Brief description of the drawings

Embodiments of the present invention will now be described by way of non-limiting example only, with reference to the accompanying figures, in which:
Figure 1a shows a wind turbine comprising a rotor blade arranged in a substantially horizontal orientation and a temporary work platform assembly installed inside the blade;
Figure 1b shows the wind turbine with the rotor blade arranged in a substantially vertical orientation and extending downwardly from a hub of the turbine;
Figure 2 shows a support structure of the temporary work platform assembly installed inside the wind turbine blade;
Figure 3 shows a platform arranged with the support structure inside the blade;
Figure 4 shows climbing apparatus arranged to extend between the platform and a root of the wind turbine blade;
Figure 5 shows a schematic cutaway view of the horizontally-arranged wind turbine blade with the temporary work platform assembly installed therein;
Figure 6 shows a schematic cutaway view of the blade arranged vertically with the platform inside the blade;
Figure 7 shows an ancillary platform assembled above the platform with the blade in the vertical orientation; and
Figure 8 shows a collar surrounding a manhole defined in a plate of a pitch bearing to guard the manhole during a service operation on the blade.

### Detailed description

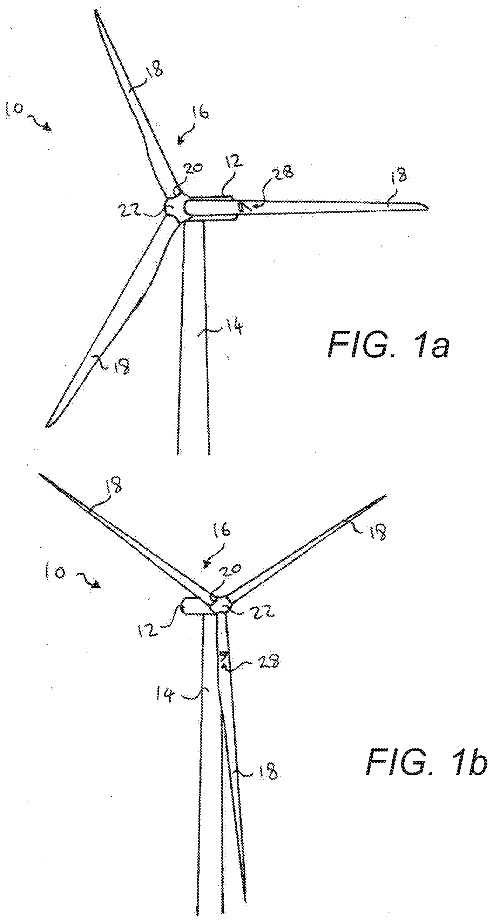

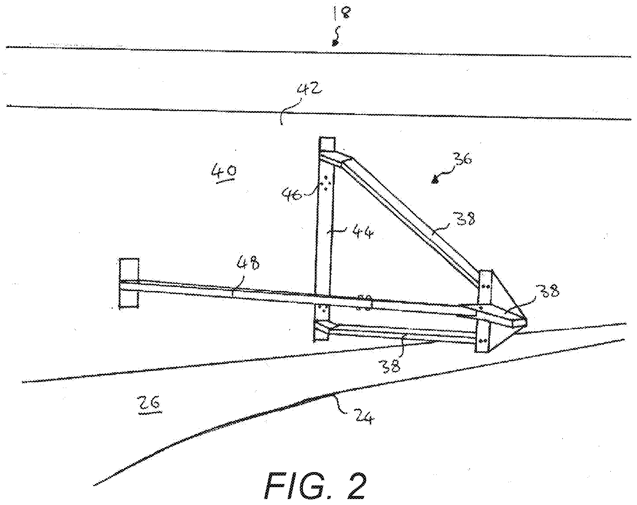

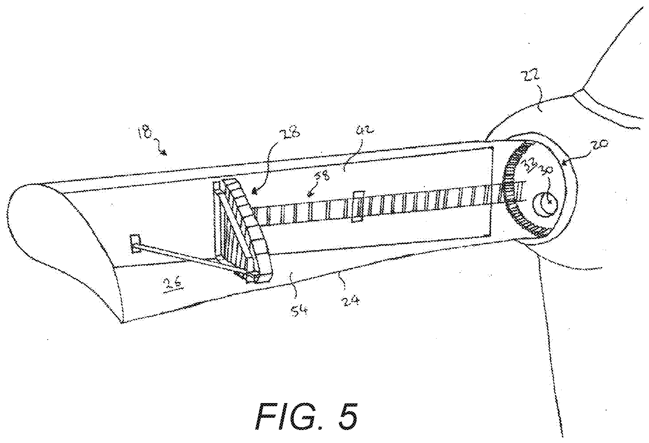

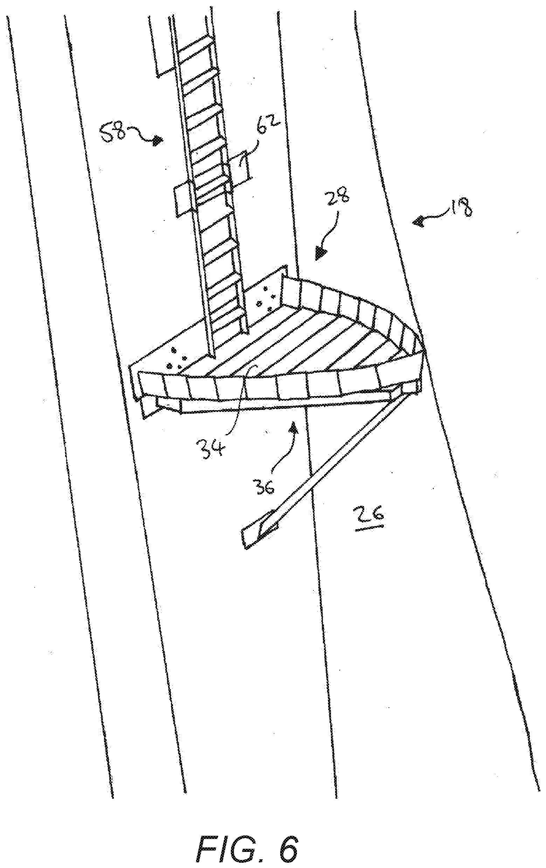

Figures 1a and 1b show a utility-scale wind turbine 10 comprising a nacelle 12 supported at the top of a tower 14. A rotor 16 is rotatably coupled to the nacelle 12, and the rotor 16 comprises a plurality of wind turbine blades 18 attached at their respective root end 20 to a central hub 22. The wind turbine blades 18 comprise an outer shell 24 defining an interior cavity 26 (shown in Figures 2 to 7). As described by way of background above, service operations such as inspection and/or maintenance work may be required inside the interior cavity 26 at some stage during the lifetime of the blade 18. As will be described in more detail below, a method of servicing a wind turbine blade 18 may comprise installing a work platform 28 inside the blade 18, i.e. inside the interior cavity 26, as shown in Figures 1a and 1b. For example, the work platform 28 may be installed inside the interior cavity 26 between a spar component 42 and a trailing edge of the shell 24 (as shown in Figures 5 and 6), between multiple spar components 42 (not shown), or between a spar component 42 and a leading edge of the shell 24 (not shown).

Referring initially to Figure 1a, the work platform 28 may be installed inside the wind turbine blade 18 with the blade arranged in a first orientation. For example, the rotor 16 may be rotated to arrange the blade 18 in a 3 o'clock position such that the blade 18 is substantially horizontal. The substantially horizontal orientation of the wind turbine blade 18 facilitates a relatively simple installation process because technicians may stand and walk on an inner surface of the blade shell 24 whilst installing the work platform 28.

Following installation of the work platform 28 in the first orientation, the blade 18 may then be arranged in a second orientation in which the work platform 28 is used to support a technician performing a service operation on the blade 18. As shown in Figure 1b, the blade 18 may be arranged in a 6 o'clock position in the second orientation such that the blade 18 is substantially vertical.

Arranging the blade 18 vertically, i.e. extending substantially downwardly from the hub 22, significantly reduces the structural loads on the blade 18 in comparison to a horizontal arrangement. The work platform 28 also provides a level and stable surface to safely support technicians during a service operation. As such, use of the work platform 28 with the blade 18 arranged vertically safely facilitates service operations without requiring the blade 18 to be removed from the wind turbine 10.

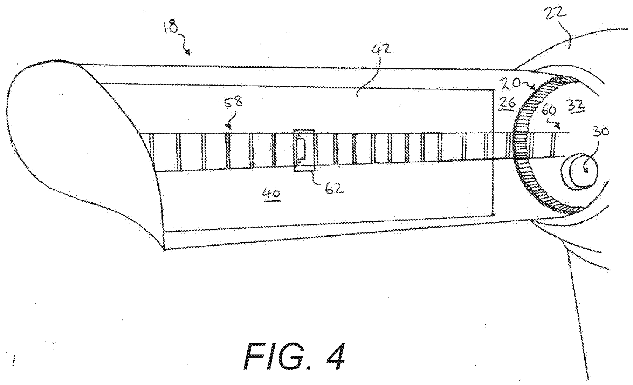

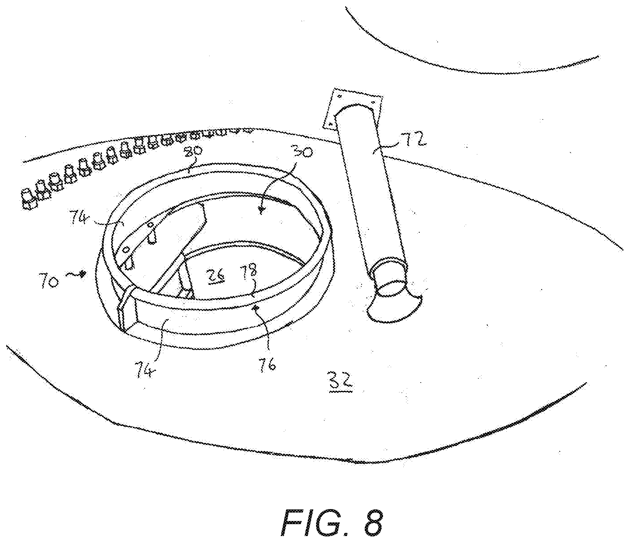

As shown in Figures 4 and 5, access to an interior cavity 26 of the wind turbine blade 18 may be facilitated through an access opening 30, such as a manhole, defined in a partition 32 at or near the root end 20 of the blade 18. The manhole 30 may be defined in a partition 32 such as a bulkhead arranged inside the blade 18 or inside the hub 22, or as shown in Figure 8 the manhole 30 may be defined in a plate of a pitch bearing, for example. Access openings or manholes 30 may be small in diameter relative to the root end 20 of the blade 18 to maintain the structural benefits of a bulkhead or bearing plate 32. For example, the manhole 30 may have a maximum diameter of 1 m or less to minimise the effect of the manhole 30 on the structural capacity of the partition 32. In preferred examples, the manhole 30 may have a minimum diameter or width of 0.6 m or more to facilitate safe entry and exit through the manhole 30 for a service technician wearing with protective safety equipment. However, an access opening 30 such as a manhole may limit the size of apparatus that can be taken into the blade 18 for installation in some examples.

The work platform 28 may therefore be assembled from a kit of parts in some examples. Preferably, the kit of parts is configured to fit through the manhole 30 for delivery into the internal cavity 26. Installing the work platform 28 may therefore comprise delivering a kit of parts into the internal cavity 26 of the blade 18 through the manhole 30, and assembling the work platform 28 from the kit of parts inside the blade 18. As such, the work platform 28 may be equally referred to as a work platform assembly 28. Such a configuration advantageously facilitates delivery of the kit of parts into the interior cavity 26 of the blade 18 whilst the blade 18 remains attached to the wind turbine 10.

Assembling the work platform assembly 28 from a kit of parts means that the platform assembly 28 can be delivered into the blade 18 through the manhole 30 in a disassembled state before being assembled within the blade 18 to form a work platform assembly 28 that would otherwise not fit through a manhole 30.

Features of the work platform assembly 28 and method for installing the work platform assembly 28 inside the wind turbine blade 18 will now be described in more detail with reference to the remaining figures.

The work platform assembly 28 may comprise a platform 34 and a support structure 36 configured to support the platform 34 in use. With reference to Figure 2 for example, the support structure 36 may comprise a plurality of support members 38. The support members 38 may be connected together inside the blade 18 to form the support structure 36. Such an installation method means that each support member 38 can be separately transported into the blade 18 through the manhole 30 before being assembled at the required radial position within the blade 18.

In some examples, the support structure 36 may be adapted for connection to an internal surface 40 of the wind turbine blade 18. For example, the blade 18 may comprise a spar component 42, such as a shear web or a box spar. The support structure 36 may therefore be configured for connection to the spar component 42. Connecting the support structure 36 to an internal surface 40 of the wind turbine blade 18 may increases the stability and load bearing capacity of the platform assembly 28.

The support structure 36 preferably comprises a bracket 44 via which the support members 38 are connected to the internal surface 40 of the blade 18. Such a bracket 44 may comprise a plurality of distributed attachment points 46 to distribute the weight of the platform assembly 28 in use and to thereby avoid forming stress concentrations in the surface 40 to which the support structure 36 is connected.

In preferred examples, the support structure 36 may be adapted such that one or more connections between the support structure 36 and the internal surface 40 are hinged connections. As such, in some preferred examples, the support structure 36 may be hinged relative to the internal surface 40. A hinged connection may allow the platform assembly 28 to move relative to the internal surface 40 in situations where the surface 40 moves or flexes when the blade 18 is rearranged between orientations with the platform assembly 28 installed. In particular, a hinged connection may substantially minimize the risk of stresses forming in the support structure 36 and/or internal surface 40 as a result of their mutual connection when the blade 18 is rearranged between horizontal and vertical orientations.

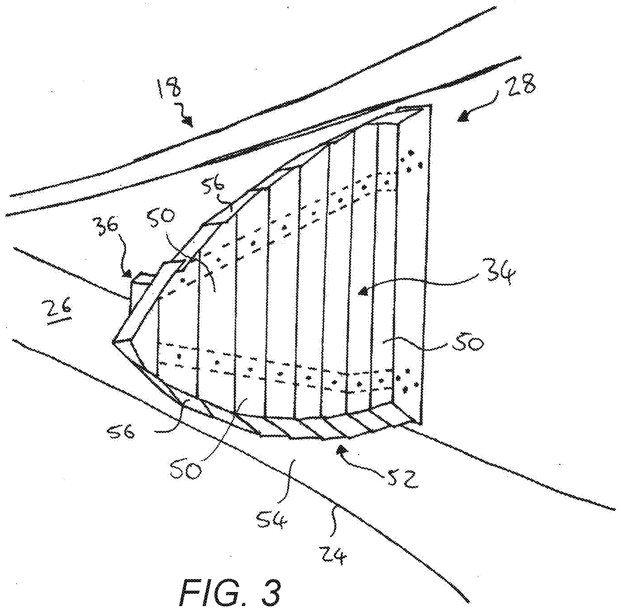

The support structure 36 may further comprise an oblique support member 48 configured to extend between the internal surface 40 and the platform 34 (shown in Figure 3). The oblique support member 48 is preferably configured to extend transverse to both the internal surface 40 and the platform 34 when assembled. As such, the oblique support member 48 may increase the stability and load bearing capacity of the support structure 36. At least one end of the oblique support member 48 is preferably configured to form a hinged connection. For example, the oblique support member 48 may be configured to form a hinged connection at one end with the internal surface 40. Alternatively or additionally, the oblique support member 48 may be configured to form a hinged connection at its other end with one or more other support members 38 of the support structure 36. As described above, such hinged connections may substantially minimise the risk of stresses forming when the blade 18 is rearranged with the platform assembly 28 installed therein.

The oblique support member 48 may be extendable between a plurality of discrete lengths to simplify delivery of the support member 48 into the blade 18. For example, the oblique support member 48 may be telescopically extendable. Manoeuvring a long support member 48 through the turbine 10 and into the blade 18 may be cumbersome or physically impossible. However, a support member 48 that can be extended once delivered into the blade 18 may overcome the constraints of delivering the support member 48 into the blade 18 whilst still providing a long support member of the requisite length. Similarly, one or more other support members 38 of the support structure 36 may be extendable.

With reference now also to Figure 3, the platform assembly 28 comprises a platform 34 for supporting a person during service or maintenance of the wind turbine blade 18. The platform 34 preferably comprises a plurality of panels 50 which are arranged inside the blade 18 to form the platform 34. Forming the platform 34 from a plurality of panels 50 facilitates the transport and delivery of a platform 34 into the blade 18 through a manhole 30 that would otherwise constrain the size of equipment that can be taken into the blade 18.

In some examples, the panels 50 may be pre-connected before being arranged inside the blade 18 to form the platform 34. For example, the plurality of panels 50 may be configured to be hingedly connected to one another such that the platform 34 can be unfolded inside the blade 18 to form the platform 34. However, in preferred examples, the platform 34 may be of modular construction, and may therefore comprise a plurality of separate panels 50. As such, if so required, each of the panels 50 may be transported and delivered separately into the interior cavity 26 to most effectively facilitate simple delivery of the panels 50.

The panels 50 are preferably directly or indirectly releasably connected to the support structure 36. This provides a stable and secure platform 34 for supporting one or more technicians during the service operation. The panels 50 may be releasably connected to the support structure 36 via mechanical fastenings such as bolts for example. The platform 34 is therefore preferably configured for simple disassembly after use in the service operation.

When arranged together, the panels 50 preferably define a substantially planar work surface. With the blade 18 in the first orientation, the platform 34 may be in a substantially vertical plane. However, with the blade 18 arranged in the second orientation for use during the service operation, the platform 34 is preferably in a substantially horizontal plane, as shown in Figure 6 for example.

The panels 50 may be configured for arrangement adjacent to one another to form the platform 34, as shown in Figure 3. Each of the panels 50 may be configured to abut, or fit into or against, an adjacent panel 50 such that the platform 34 defines a substantially continuous work surface. As such, the platform 34 preferably comprises no gaps between adjacent panels 50 to ensure that all tools, materials or debris from the service operation are contained on the platform 34 and do not fall down into the remainder of the internal cavity 26 below the platform 34 in use. Similarly, the panels 50 themselves are preferably continuous, i.e. not comprising gaps, to prevent items from falling through the panels 50 and into the blade cavity 26 below.

The platform assembly 28 may further comprise a skirt 52 extending around the platform 34 to help ensure that no items fall down into the interior cavity 26 below the platform 34 in use. The skirt 52 preferably extends upwards from, i.e. transverse to, the platform 34 in use. As such, the skirt 52 may form a wall or barrier around a periphery of the platform 34 to contain items on the platform 34. The skirt 52 may prevent items or tools that are accidentally kicked or moved on the platform 34 from falling off the platform 34 and into the cavity 26 below the platform assembly 28.

In some examples, the skirt 52 may be configured to extend from the platform 34 to one or more internal surfaces 54 of the wind turbine blade 18, such as an internal surface 54 of the outer shell 24. As such, the skirt 52 may be configured to close any gaps between the platform 34 and the internal surfaces 54 of the blade 18. The skirt 52 may therefore help to effectively divide the cavity 26 above and below the platform 34. Advantageously, the skirt 52 may therefore help to ensure that items, tools or debris from above the platform 34 may not pass into the cavity 26 below the platform 34, even if accidentally dropped from above the skirt 52.

In some preferred examples, the skirt 52 may comprise a plurality of adaptable skirt sections 56. For example, the skirt sections 56 may be hinged relative to the platform 34 such that the skirt sections 56 can each be arranged to extend from the platform 34 to an internal surface 54 of the blade 18 to close any gaps between the platform 34 and the internal surfaces of the blade surrounding the platform 34. The adaptable skirt sections 56 make the platform assembly 28 suitable for use at a plurality of different radial positions inside the blade 18, despite the shape of the shell 24 being different at different radial positions along the blade 18. The adaptable skirt sections 56 may each be arranged at different angles relative to the platform 34 at different radial positions along the blade 18 to extend to the internal surfaces 54 and close any gaps between the platform 34 and the internal surfaces 54.

As shown in Figure 4, climbing apparatus 58 may be arranged to extend between the platform assembly 28 and the root end 20 of the rotor blade 18. The climbing apparatus 58 is preferably arranged whilst the blade 18 is in the horizontal orientation for ease of installation. At least a rootmost end 60 of the climbing apparatus 58 is preferably releasably fixed to part of the wind turbine 10. For example, the climbing apparatus 58 may be releasably fixed to an internal surface of the blade 18, a spar component 42, or the hub 22.

In preferred examples, the climbing apparatus 58 may comprise one or more rope ladders arranged between the platform assembly 28 and the blade root 20. A rope ladder 58 may provide an advantageous compromise between portability and stability or safety of use when accessing the platform 34. For example, a rope ladder 58 can be rolled up for transport and delivery into the blade 18 whilst providing a fast and safe method for accessing the platform 34 when unrolled. In some examples, the climbing apparatus 58 may be connected to an internal surface 40, such as the spar component 42, via a bracket 62 for increased stability during use.

Figure 5 shows the platform assembly 28 installed inside the wind turbine blade 18 whilst the rotor 16 is arranged such that the blade 18 extends substantially horizontally from the hub 22. As shown in Figure 5, in some examples the platform assembly 28 may be installed between the spar component 42 and the inner surface 54 of the shell 24. Such an arrangement may be advantageous for service operations requiring access to the shell 24. Preferably only the skirt 52 or skirt sections 56 (where included) may be in contact with the inner surface 54 of the shell 24 following installation of the platform assembly 28 in the blade 18. In examples not including a skirt 52 or skirt sections 56, the platform assembly 28 is preferably installed inside the wind turbine blade such that the platform assembly 28 does not contact the inner surface 54 of the shell 24. Such an installation avoids any risk of damage to, or deformation of, the shell 24 that could lead to stress concentration during normal use of the blade 18.

In other examples, the blade may comprise a main spar component 42 and an additional spar component (not shown), such as a trailing edge shear web for example. As such, the platform assembly 28 may be installed between two spar components inside the wind turbine blade 18. For example the work platform assembly 28 may be used to support a technician during inspection and/or servicing of a spar component 42. A work platform assembly 28 as described herein may be adapted for installation at any required radial position inside the blade 18 for supporting a technician during a service operation.

In some examples, the platform assembly 28 may comprise one or more attachment points (not shown) configured for releasably fixing one or more tools to the platform assembly 28. Advantageously, one or more tools required for the service operation may be fixed to the platform assembly 28 by means of the attachment points when the blade 18 is arranged in a horizontal orientation. When the blade 18 is subsequently rearranged into a vertical orientation for the service operation, the tools fixed to the platform assembly 28 are conveniently already provided with the platform assembly 28, ready for use. Fixing the tools to the platform assembly 28 in the horizontal orientation therefore avoids or substantially minimises the need to hoist and lower tools between the hub 22 and the platform assembly 28 in the vertically-arranged blade 18 for use in the service operation.

Following installation of the platform assembly 28, the blade 18 may be moved from the horizontal orientation to a substantially vertical orientation with the platform assembly 28 installed therein, as shown in Figure 6. The platform 34 is therefore preferably arranged in a substantially horizontal plane for use in supporting a technician during a service operation in the vertically arranged blade 18. Access to the platform 34 from the hub 22 may be facilitated by the climbing apparatus 58 as previously described.

In an in-use arrangement, i.e. with the blade 18 extending substantially vertically downwardly from the hub 22, the platform 18 is preferably propped up, or underpinned, from below by the support structure 36. Such a configuration may advantageously ensure that the platform 34 is substantially free from obstructions during the service operation, because the apparatus for supporting the technician is arranged below the platform 34.

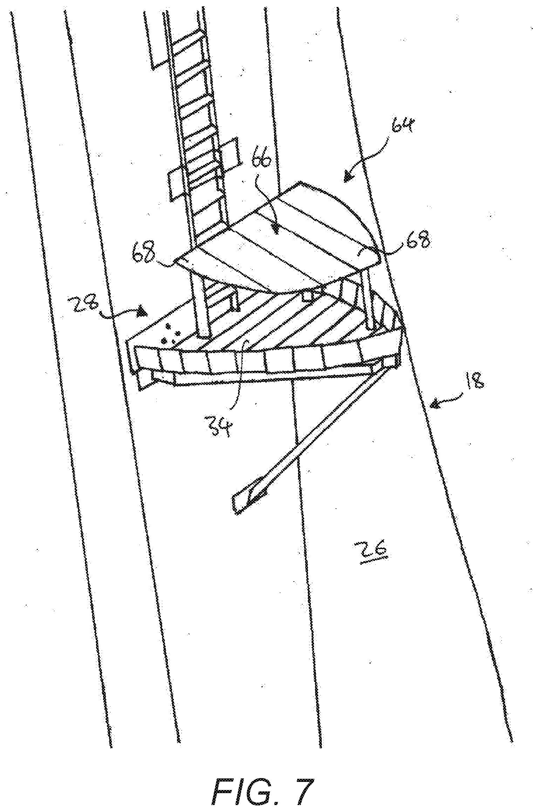

Figure 7 shows an ancillary platform 64 which may be assembled above the platform 34 inside the blade 18 from a kit of parts when the blade 18 is arranged in a vertical orientation. In preferred examples, the ancillary platform 64 may be supported by the main platform 34, i.e. assembled on top of the platform 34 to facilitate swift assembly and disassembly. Use of one or more ancillary platforms 64 may facilitate support of a technician at different radial positions within the blade 18 without needing to relocate the main platform 34. As such, access to various different radial positions above, i.e. inboard from, the platform 34 can be achieved such that a technician may work along the blade 18 whilst the blade 18 is maintained in the same vertical orientation throughout the service operation.

The ancillary platform 64 preferably comprises a substantially planar floor section 66 for supporting a technician. The floor section 66 may be discontinuous, i.e. comprising gaps, to provide a lightweight ancillary platform 64. For example, the floor section 66 may comprise one or more panels 68 of mesh or grating. As previously described, the main platform 34 preferably defines a substantially continuous work surface, and any items falling from the floor section 66 of the ancillary platform 64 may therefore be contained on the main platform 34.

The kit of parts from which the ancillary platform 64 may be assembled may be attached to the platform assembly 28 when the blade 18 is in the horizontal arrangement in some examples. This may advantageously negate or substantially minimise any requirement to hoist or lower ancillary platform parts and equipment between the hub 22 and the platform 34 when the blade 18 is arranged vertically.

Whilst not shown specifically in the accompanying figures, in some examples the wind turbine 10 may be yawed during the service operation. For example, the wind turbine 10 may be yawed in dependence on one or more factors when the rotor blade 18 is arranged to extend substantially vertically downwardly from the hub 22 for the service operation. The wind turbine 10 may be yawed in dependence on the direction and speed of the prevailing wind, for example, to actively manage the wind load on the blade 18 during the service operation.

In advantageous examples, the work platform assembly 28 may be removed from the blade 18 following completion of the service operation. As such, the work platform assembly 28 may be referred to as a temporary work platform assembly 28. The blade 18 is preferably arranged in a substantially horizontal orientation, i.e. a 3 o'clock or 9 o'clock position, to remove the platform assembly 28 from the blade 18. The temporary work platform assembly 28 therefore facilitates improved methods of servicing a wind turbine blade 18, i.e. with increased safety and stability, without permanently increasing the weight of the blade 18.

Performing a service operation on a wind turbine blade 18 with the blade 18 extending substantially downwardly from the hub 22 has a number of advantages as described above. However, such new methods of servicing a wind turbine blade 18 also introduce new challenges not previously considered in typical methods of servicing blades 18. For example, the interior cavity 26 of the blade 18 extends downwards when the blade 18 is arranged to extend vertically downwards from the hub 22. Leaving the manhole 30 in the partition 32 uncovered to facilitate access to the interior cavity 26 for the service operation may introduce new considerations for operating safely within the blade 18 and hub 22.

Partitions 32 such as a bulkhead or a bearing plate may function as a work platform when the blade 18 is arranged to extend substantially vertically downwardly. As such, tools or other service apparatus may be located on the partition 32. In some preferred examples, the wind turbine 10 may therefore comprise a collar 70 at least partially surrounding the manhole 30 to provide a wall or barrier at or near a perimeter of the manhole 30. The collar 70 may extend upwardly from a surface of the partition 32 to block items, such as tools or other materials, from being accidentally dropped or kicked down into the blade cavity 26 through the manhole 30 when the blade 18 extends vertically downwardly from the hub 22. In particular the collar 70 may protect technicians supported on a work platform assembly 28 inside the blade 18 by blocking items from falling into the manhole 30, thereby improving the safety of the service operation.

As shown in Figure 8, in preferred examples the collar 70 may form a substantially continuous wall or barrier around the manhole 30. In other words, the collar 70 preferably extends around a complete perimeter of the manhole 30 to ensure that no items can be accidentally kicked or dropped into the manhole 30 from any direction.

In some examples, the collar 70 may be integral with the partition 32 through which the manhole 30 extends, i.e. integral with a bulkhead or a bearing plate for example. However, in preferred examples, the collar 70 may be removable. In some examples, the collar 70 may be releasably fastened to the partition 32, for example by means of a bolted connection. As such, the collar 70 may be temporarily installed in the wind turbine 10 during the service operation. Following the service operation, the collar 70 may be subsequently removed when not in use for guarding the manhole 30. This may be preferable in examples where the wind turbine 10 comprises a pitch drive mechanism 72, such as an actuator, to ensure that the pitch drive mechanism 72 has a full range of movement within the hub 22 without clashing with the collar 70.

The collar 70 may be configured for ease of transport or delivery to location of the manhole 30 in the wind turbine 10. For example, the collar 70 may be formed of a plurality of collar sections 74 which may make carrying and manoeuvring the collar 70 inside the hub 22 easier. The collar sections 74 may be connected together or arranged together on the partition 32 in some examples to form the collar 70 around the manhole 30. Further, in some advantageous examples the collar 70 may be formed of a substantially lightweight material, such as a polymer, such that the collar 70 can be transported to the manhole location and repositioned with relative ease.

In some examples, the collar 70 may comprise an upper portion 76 that is structurally reinforced. This may help to increase the structural rigidity of the collar 70 such that it can withstand the force of items and tools impacting the collar 70 without being damaged or crumpling. For example, the upper portion 76 of the collar 70 may comprise a thickened rim 78 to increase the rigidity of the collar 70.

Whilst not shown in the figures, during a service operation inside the blade 18, technicians or service personnel may be secured to the turbine 10 by a safety rope and harness. In some examples such safety ropes may be attached to the hub 22 and extend through the manhole 30 into the blade cavity 26. In examples where the wind turbine 10 comprises a collar 70 around the manhole 30, an upper edge 80 of the collar 70 may comprise a rounded cross-sectional profile to reduce friction and wear on safety ropes extending through the manhole 30.

It will be appreciated that the description provided above serves to demonstrate a plurality of possible examples of the present invention. Features described in relation to any of the examples above may be readily combined with any other features described with reference to different examples without departing from the scope of the invention as defined in the appended claims.

Further, it will be appreciated that the above description and accompanying figures are provided merely as an example. Many alternatives to the specific examples described above are therefore possible without departing from the scope of the invention as defined in the appended claims.

## Claims

1. A temporary work platform assembly (28) for installation inside a wind turbine rotor blade (18), the work platform assembly comprising a platform (34) for supporting a person during service or maintenance of the wind turbine blade, and a support structure (36) for supporting the platform, the support structure being adapted for connection to an internal surface (40) of the wind turbine blade, and the platform comprising a plurality of panels (50), **characterized in that** the internal surface of the wind turbine blade is a surface of a spar component (42).

2. The temporary work platform assembly of Claim 1, wherein the platform (34) is of modular construction and the panels (50) are configured for arrangement adjacent to one another to form the platform.

3. The temporary work platform assembly of Claim 2, wherein each panel (50) is configured to abut, or fit into or against, an adjacent panel such that the platform (34) defines a substantially continuous work surface.

4. The temporary work platform assembly of any preceding claim, wherein the support structure (36) is configured to prop up the platform from below in use.

5. The temporary work platform assembly of any preceding claim, wherein the support structure (36) comprises a plurality of interconnected support members (38).

6. The temporary work platform assembly of any preceding claim, wherein the support structure (36) is adapted to form a hinged connection with the internal surface of the wind turbine blade.

7. The temporary work platform assembly of any preceding claim, wherein the support structure (36) comprises an oblique support member (48) configured to extend between and transverse to both the internal surface and the platform.

8. The temporary work platform assembly of any preceding claim further comprising a skirt (52) extending around the platform (34) , the skirt being configured to extend from the platform to one or more internal surfaces of the wind turbine blade.

9. The temporary work platform assembly of Claim 8, wherein the skirt (52) comprises a plurality of adaptable skirt sections hingedly coupled to the platform.

10. The temporary work platform assembly of any preceding claim, further comprising an ancillary platform (34) configured for arrangement above the platform.

11. A wind turbine blade (18) comprising a temporary work platform assembly as defined in any preceding claim.

12. A method of installing a temporary work platform (28) assembly inside a wind turbine rotor blade (18), the method comprising
providing a plurality of panels (50) and a support structure (36) at a required location inside the wind turbine blade;
connecting the support structure to an internal surface (40) of the wind turbine blade; and
arranging the panels with the support structure to form a platform for supporting a person during service or maintenance of the wind turbine blade;
wherein the temporary work platform assembly is installed in-situ inside a wind turbine rotor blade attached to a wind turbine.

13. The method of Claim 12, wherein providing the plurality of panels (50) and the support structure (36) at the required location inside the wind turbine blade comprises delivering the panels and support structure into the wind turbine blade through a manhole (30) in a bulkhead or plate (32) at or near the root of the wind turbine blade.

## Patentansprüche

1. Temporäre Arbeitsplattformanordnung (28) zur Installation im Inneren eines Windkraftanlagen-Rotorblatts (18), wobei die Arbeitsplattformanordnung eine Plattform (34) zum Tragen einer Person während Wartung oder Instandhaltung des Windkraftanlagenblatts und eine Trägerstruktur (36) zum Tragen der Plattform umfasst, wobei die Trägerstruktur zur Verbindung mit einer Innenfläche (40) des Windkraftanlagenblatts ausgelegt ist und die Plattform eine Vielzahl von Platten (50) umfasst, **dadurch gekennzeichnet, dass**
die Innenfläche des Windkraftanlagenblatts eine Oberfläche einer Holmkomponente (42) ist.

2. Temporäre Arbeitsplattformanordnung nach Anspruch 1, wobei die Plattform (34) modular aufgebaut ist und die Platten (50) für eine Anordnung nebeneinander konfiguriert sind, um die Plattform zu bilden.

3. Temporäre Arbeitsplattformanordnung nach Anspruch 2, wobei jede Platte (50) dazu konfiguriert ist, an eine benachbarte Platte anzuliegen oder in diese zu passen oder anzugrenzen, sodass die Plattform (34) eine im Wesentlichen durchgängige Arbeitsfläche bildet.

4. Temporäre Arbeitsplattformanordnung nach einem vorstehenden Anspruch, wobei die Trägerstruktur (36) dazu konfiguriert ist, die Plattform im Gebrauch von unten abzustützen.

5. Temporäre Arbeitsplattformanordnung nach einem vorstehenden Anspruch, wobei die Trägerstruktur (36) eine Vielzahl miteinander verbundener Tragelemente (38) umfasst.

6. Temporäre Arbeitsplattformanordnung nach einem vorstehenden Anspruch, wobei die Trägerstruktur (36) dazu ausgelegt ist, eine gelenkige Verbindung mit der Innenfläche des Windkraftanlagenblatts zu bilden.

7. Temporäre Arbeitsplattformanordnung nach einem vorstehenden Anspruch, wobei die Trägerstruktur (36) ein schräges Tragelement (48) umfasst, das dazu konfiguriert ist, sich zwischen der Innenfläche und der Plattform und quer zu beiden zu erstrecken.

8. Temporäre Arbeitsplattformanordnung nach einem vorstehenden Anspruch, die weiter eine Schürze (52) umfasst, die sich um die Plattform (34) erstreckt, wobei die Schürze dazu konfiguriert ist, sich von der Plattform zu einer oder mehreren Innenflächen des Windkraftanlagenblatts zu erstrecken.

9. Temporäre Arbeitsplattformanordnung nach Anspruch 8, wobei die Schürze (52) eine Vielzahl von anpassbaren Schürzenabschnitten umfasst, die gelenkig mit der Plattform gekoppelt sind.

10. Temporäre Arbeitsplattformanordnung nach einem vorstehenden Anspruch, die weiter eine Zusatzplattform (34) umfasst, die zur Anordnung über der Plattform konfiguriert ist.

11. Windkraftanlagenblatt (18), das eine temporäre Arbeitsplattformanordnung wie in einem der vorstehenden Ansprüche definiert umfasst.

12. Verfahren zum Installieren einer temporären Arbeitsplattform (28) innerhalb eines Windkraftanlagen-Rotorblatts (18), wobei das Verfahren umfasst
Bereitstellen einer Vielzahl von Platten (50) und einer Trägerstruktur (36) an einer erforderlichen Stelle im Inneren des Windkraftanlagenblatts;
Verbinden der Trägerstruktur mit einer Innenfläche (40) des Windkraftanlagenblatts; und
Anordnen der Platten mit der Trägerstruktur, um eine Plattform zum Tragen einer Person während Wartung oder Instandhaltung des Windkraftanlagenblatts zu bilden;
wobei die temporäre Arbeitsplattformanordnung vor Ort innerhalb eines an einer Windkraftanlage befestigten Windkraftanlagen-Rotorblatts installiert wird.

13. Verfahren nach Anspruch 12, wobei Bereitstellen der Vielzahl von Platten (50) und der Trägerstruktur (36) an der erforderlichen Stelle innerhalb des Windkraftanlagenblatts Einbringen der Platten und der Trägerstruktur in das Windkraftanlagenblatt durch ein Mannloch (30) in einem Schott oder einer Platte (32) an oder nahe der Wurzel des Windkraftanlagenblatts umfasst.

## Revendications

1. Ensemble plate-forme de travail temporaire (28) destiné à être installé à l'intérieur d'une pale de rotor d'éolienne (18), l'ensemble plate-forme de travail comprenant une plate-forme (34) destinée à supporter une personne pendant l'entretien ou la maintenance de la pale d'éolienne, et une structure de support (36) destinée à supporter la plate-forme, la structure de support étant conçue pour être raccordée à une surface interne (40) de la pale d'éolienne, et la plate-forme comprenant une pluralité de panneaux (50), **caractérisé en ce que**
la surface interne de la pale d'éolienne est une surface d'un composant de poutre (42).

2. Ensemble plate-forme de travail temporaire selon la revendication 1, dans lequel la plate-forme (34) est de construction modulaire et les panneaux (50) sont configurés pour être disposés de manière adjacente les uns aux autres pour former la plate-forme.

3. Ensemble plate-forme de travail temporaire selon la revendication 2, dans lequel chaque panneau (50) est configuré pour venir en butée ou s'adapter dans ou contre un panneau adjacent de telle sorte que la plate-forme (34) définisse une surface de travail sensiblement continue.

4. Ensemble plate-forme de travail temporaire selon une quelconque revendication précédente, dans lequel la structure de support (36) est configurée pour soutenir la plate-forme par le bas lors de l'utilisation.

5. Ensemble plate-forme de travail temporaire selon une quelconque revendication précédente, dans lequel la structure de support (36) comprend une pluralité d'éléments de support interconnectés (38).

6. Ensemble plate-forme de travail temporaire selon une quelconque revendication précédente, dans lequel la structure de support (36) est conçue pour former un raccordement articulé avec la surface interne de la pale d'éolienne.

7. Ensemble plate-forme de travail temporaire selon une quelconque revendication précédente, dans lequel la structure de support (36) comprend un élément de support oblique (48) configuré pour s'étendre entre et transversalement à la fois à la surface interne et à la plate-forme.

8. Ensemble plate-forme de travail temporaire selon une quelconque revendication précédente, comprenant en outre une jupe (52) s'étendant autour de la plate-forme (34), la jupe étant configurée pour s'étendre de la plate-forme à une ou plusieurs surfaces internes de la pale d'éolienne.

9. Ensemble plate-forme de travail temporaire selon la revendication 8, dans lequel la jupe (52) comprend une pluralité de sections de jupe adaptables articulées sur la plate-forme.

10. Ensemble plate-forme de travail temporaire selon une quelconque revendication précédente, comprenant en outre une plate-forme auxiliaire (34) configurée pour être disposée au-dessus de la plate-forme.

11. Pale d'éolienne (18) comprenant un ensemble plate-forme de travail temporaire tel que défini dans une quelconque revendication précédente.

12. Procédé d'installation d'un ensemble plate-forme de travail temporaire (28) à l'intérieur d'une pale de rotor d'éolienne (18), le procédé comprenant
la fourniture d'une pluralité de panneaux (50) et d'une structure de support (36) à un emplacement requis à l'intérieur de la pale d'éolienne ;
le raccordement de la structure de support à une surface interne (40) de la pale d'éolienne ; et
l'agencement des panneaux avec la structure de support pour former une plate-forme destinée à soutenir une personne pendant l'entretien ou la maintenance de la pale d'éolienne ;
dans lequel l'ensemble plate-forme de travail temporaire est installé in situ à l'intérieur d'une pale de rotor d'éolienne fixée à une éolienne.

13. Procédé selon la revendication 12, dans lequel la fourniture de la pluralité de panneaux (50) et de la structure de support (36) à l'emplacement requis à l'intérieur de la pale d'éolienne comprend l'acheminement des panneaux et de la structure de support dans la pale d'éolienne à travers un trou d'homme (30) dans une cloison ou une plaque (32) au niveau ou à proximité du pied de la pale d'éolienne.
